Europäisches Patentamt

European Patent Office

Office européen des brevets

(19)

(11) Publication number: **0 354 649**
**A2**

# EUROPEAN PATENT APPLICATION

(12)

(21) Application number: 89306026.9

(22) Date of filing: 14.06.89

(51) Int. Cl.⁴: **G01F 1/68 , G01F 5/00**

(30) Priority: 11.08.88 US 230822

(43) Date of publication of application:
**14.02.90 Bulletin 90/07**

(84) Designated Contracting States:
**DE FR GB**

(71) Applicant: **GENERAL MOTORS CORPORATION
General Motors Building 3044 West Grand
Boulevard
Detroit Michigan 48202(US)**

(72) Inventor: **Pugh, Brian C.
8514 Joseph
Grand Blanc Michigan 48439(US)**

(74) Representative: **Denton, Michael John et al
Patent Section - Luton Office (F6) Vauxhall
Motors Limited P.O. Box 3 Kimpton Road
Luton Bedfordshire LU2 0SY(GB)**

(54) Close-coupled mass airflow meter and throttle plate assembly.

(57) Air meter apparatus (16) for an internal combustion engine includes a pair of venturi airflow channels (20,22) each containing an airflow sensor (28,30) of the heated element type located at the throat of the venturi. Each airflow channel is symmetrical with respect to a plane of symmetry passing through the axis (14) of the engine throttle plate (12) which is "close-coupled" with the air meter apparatus. The plane of symmetry is defined by a longitudinal axis (24) perpendicular to the throttle axis and a lateral axis parallel to the throttle axis. As a result, the air velocity profile across the airflow channels in the vicinity of the sensors is rendered less sensitive to the angular position of the throttle plate.

FIG.2

EP 0 354 649 A2

## CLOSE-COUPLED MASS AIRFLOW METER AND THROTTLE PLATE ASSEMBLY

This invention relates to the measurement of mass airflow in an internal combustion engine, and in particular to a mass airflow meter therefor.

The usual internal combustion engine includes a throttle plate which is rotatably mounted within the air intake passage of the engine for controlling the amount of air inducted into the engine. In order to regulate the amount of fuel supplied to the engine to achieve the desired air/fuel ratio, it is necessary to determine the ingested air mass. This can be accomplished via a mass airflow meter which measures the mass airflow into the engine. In one form, this mass airflow meter may include an airflow channel through which at least a portion of the inducted air is passed and a control unit including an airflow sensor located within the airflow channel for measuring the mass airflow past the airflow sensor. This incremental mass airflow measurement may then be extrapolated across the entire cross-section of the airflow channel to obtain a measurement of overall mass airflow. Such an arrangement is shown in US-A-4,317,365.

Certain advantages related to packaging, sealing, etc. may be realized when the mass airflow meter is physically located immediately upstream of the throttle plate, that is, when the airflow meter is "close-coupled" with the throttle plate. Undesirably, however, in such a close-coupled arrangement, the air velocity profile across the airflow channel in the vicinity of the airflow sensor may be altered dependent upon the angular position of the throttle plate. In turn, this change in air velocity profile can lead to errors in the mass airflow measurement.

If at each angular position of the throttle plate there was only a single correct mass airflow rate, it might be possible to compensate for throttle angle related changes in the air velocity profile through the mass airflow meter. However, this is not the case. Instead, because of variations in the quantity of inducted air due to variations in engine speed and load, there can be a range of correct mass airflow rates corresponding to any given throttle position. Therefore, it is important that the air velocity profile be rendered as insensitive as possible to the angular position of the throttle plate. The instant invention provides an improvement in this regard.

A mass airflow meter in accordance with the present invention is characterised by the features specified in the characterising portion of claim 1.

According to the invention, a close-coupled mass airflow meter and throttle plate assembly features an airflow meter having a pair of airflow channels each containing an airflow sensor. In one aspect of the invention, the airflow channels are symmetrical with respect to a plane of symmetry passing through the axis of the throttle plate. In another aspect of the invention, the plane of symmetry is defined by a longitudinal axis perpendicular to the throttle axis and a lateral axis parallel to the throttle axis. With this configuration, it has been found that the air velocity profile across the airflow channels in the vicinity of the airflow sensors is rendered less sensitive to the angular position of the throttle plate, that is, for a given mass airflow rate, the measured value of mass airflow is more accurate (repeatable) regardless of the throttle angle.

The present invention will now be described, by way of example, with reference to the following detailed description in conjunction with the accompanying drawings, in which:-

Figure 1 is an end view of a preferred embodiment of the invention;

Figure 2 is a cross-sectional view taken along the section 2-2 of Figure 1;

Figure 3 is a cross-sectional view taken along the section 3-3 of Figure 1; and

Figure 4 is a schematic diagram of control circuitry used in conjunction with the preferred embodiment of the invention.

Referring to the drawings, an internal combustion engine (not shown) includes a cylindrical throttle body 10 through which air is inducted into the engine in an amount controlled by the angular position of a circular throttle plate 12 that is rotatable about a throttle axis 14. In order to administer fuel to the engine in an amount correct to produce the desired air/fuel ratio, it is necessary to determine the ingested air mass. This is accomplished by means of a mass airflow meter 16.

Specifically, the mass airflow meter 16 includes a flow body 18 (flow body means) which is located immediately upstream of the throttle plate 12, that is, the mass airflow meter 16 is "close-coupled" with the throttle plate 12. The flow body 18 includes a pair of airflow channels 20 and 22 that are symmetrical with respect to a plane of symmetry having a longitudinal axis 24 and a lateral axis 26. Preferably, the airflow channels 20 and 22 are each shaped in the form of a venturi. A central vane 27 lying along the plane of symmetry separates the airflow channels 20 and 22. In operation, air drawn into the engine passes through the airflow channels 20 and 22 and around the throttle plate 12. Any suitable fastening and/or sealing means may be employed at the juncture of the throttle body 10 and the flow body 18.

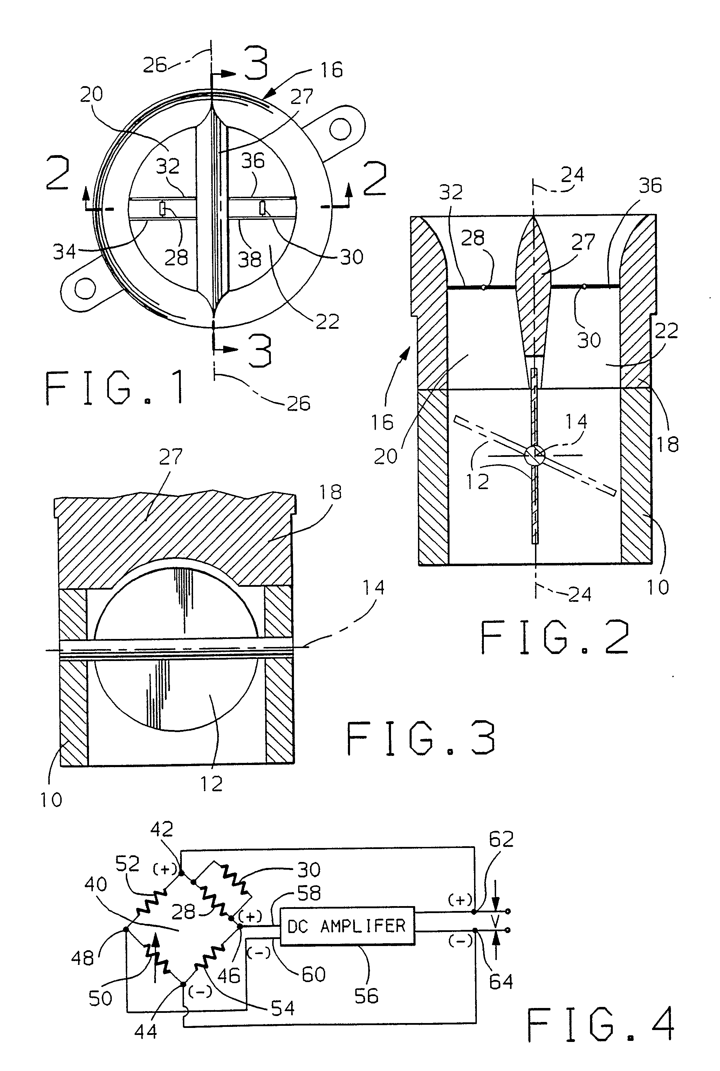

The mass airflow meter 16 also includes a pair of airflow sensors 28 and 30 mounted within the airflow channels 20 and 22, respectively, by any appropriate mounting means, for example, rods 32, 34, 36 and 38. Preferably, the airflow sensors 28 and 30 are of the heated element type and are located at the throat (that is, narrowest cross-section) of the airflow channels 20 and 22, respectively. In conjunction with suitable control circuitry (measuring means, as shown for example in Figure 4), the airflow sensors 28 and 30 are effective to measure the mass airflow into the engine.

Referring to Figure 4, a bridge circuit 40 includes a pair of input terminals 42 and 44 and a pair of output terminals 46 and 48. The airflow sensors 28 and 30 are depicted as a pair of temperature dependent resistors connected in parallel between the input terminal 42 and output terminal 46 of the bridge circuit 40. The remainder of the bridge circuit 40 is formed by a variable resistor 50 connected between input terminal 44 and output terminal 48, a temperature dependent resistor 52 connected between input terminal 42 and output terminal 48, and a balance resistor 54 connected between input terminal 44 and output terminal 46. A DC amplifier 56 includes a pair of input terminals 58 and 60 connected to the output terminals 46 and 48, respectively, of the bridge circuit 40 and a pair of output terminals 62 and 64 connected to the input terminals 42 and 44, respectively, of the bridge circuit 40.

In operation, as the airflow sensors 28 and 30 are cooled by the inducted airflow, their resistance decreases. This causes an increase in the potential at output terminal 46 in respect to the potential at output terminal 48. The voltage difference between the output terminals 46 and 48 is amplified by the DC amplifier 56 to provide an output voltage V which is applied across the input terminals 42 and 44. This results in higher current flow through the resistors of the airflow sensors 28 and 30 tending to heat them up and restore them to their initial temperature. In this manner, the magnitude of the output voltage V is a measure of the airflow past the heated airflow sensors 28 and 30. The variable resistor 50 provides for adjustment of the initial temperature of the airflow sensors 28 and 30. Temperature dependent resistor 52 provides compensation for variations in the temperature of the ambient air drawn into the airflow channels 20 and 22 of the mass airflow meter 16 and may be mounted in any location (not shown) suitable for the performance of this function.

It will be appreciated that the heated airflow sensors 28 and 30 actually measure the mass airflow in only the incremental cross-section of the airflow channels 20 and 22 at which the airflow sensors 28 and 30 are physically located. The mass airflow through other incremental cross-sectional areas of the airflow channels 20 and 22 may be somewhat different than the mass airflow past the airflow sensors 28 and 30. Nevertheless, provided that the air velocity profile across the airflow channels 20 and 22 remains substantially constant over the mass airflow range of the mass airflow meter 16, the output voltage V can be appropriately calibrated to provide an accurate measurement of the overall mass airflow into the engine. Accordingly, the accuracy (repeatability) of the mass airflow meter 16 is predicated on the establishment and maintenance of a consistent air velocity profile across the airflow channels 20 and 22 in the vicinity of the airflow sensors 28 and 30.

A substantially developed and consistent air velocity profile tends to be produced across the throat of a venturi and this is the reason that the airflow channels 20 and 22 are each preferably provided in the shape of a venturi and that the airflow sensors 28 and 30 are each preferably located at the throat of the associated venturi channel. However, despite the consistent air velocity profile otherwise developed at the throat of the venturi airflow channels 20 and 22, because the flow body 18 is close-coupled to the throttle plate 12, the air velocity profile across the airflow channels 20 and 22 may still be altered dependent upon the angular position of the throttle plate 12. The present invention tends to minimize this tendency of the air velocity profile to change in response to a change in the throttle angle.

Specifically, referring to the flow body 18 of the mass airflow meter 16, the plane of symmetry defined by the longitudinal axis 24 and the lateral axis 26 passes through the throttle axis 14 of the throttle plate 12. In particular, the longitudinal axis 24 of the plane of symmetry is perpendicular to the throttle axis 14 while the lateral axis 26 of the plane of symmetry is parallel to the throttle axis 14. With this configuration, it has been found that the air velocity profile across the airflow channels 20 and 22 in the vicinity of the airflow sensors 28 and 30 is rendered less dependent upon the angular position of the throttle plate 12 than would otherwise be the case in such a close-coupled mass airflow meter and throttle plate assembly. This is important because for any given angular position of the throttle plate 12, there can be a range of possible mass airflow rates (depending upon engine speed, volumetric efficiency, and manifold air density) so that throttle angle related variations in the air velocity profile across the airflow channels 20 and 22 cannot be satisfactorily corrected via calibration. Accordingly, as a result of the invention, the accuracy (repeatability) of the mass airflow measurement is materially improved.

Alternative arrangements to the above include, for example, the invention being employed with a variety of different sensors and control circuitry.

## Claims

1. A mass airflow meter (16) for an internal combustion engine having a throttle plate (12) which is rotatable about an axis (14) within an air intake passage of the engine for controlling the amount of air inducted into the engine, the mass airflow meter comprising: flow body means (18) locatable immediately upstream of the throttle plate including a pair of airflow channels (20,22) through which at least a portion of the inducted air is passed; and measuring means (28,30,40-64) characterised in that the measuring means (28,30, 40-64) includes a pair of airflow sensors (28,30) each located in a different one of the airflow channels for measuring the mass airflow into the engine; and in that the airflow channels (20,22) are symmetrical with respect to a plane of symmetry passing through the axis (14) of the throttle plate (12) when the flow body means is located in position such that the measured mass airflow more accurately indicates the actual mass airflow regardless of the angular position of the throttle plate (12).

2. A mass air flow meter as claimed in claim 1, wherein the plane of symmetry is defined by a longitudinal axis (24) perpendicular to the throttle axis (14) and a lateral axis (26) parallel to the throttle axis' such that the air velocity profile across the airflow channels (20,22) in the vicinity of the airflow sensors (28,30) is rendered less sensitive to the angular position of the throttle plate (12).

3. A mass air flow meter as claimed in claim 1 or claim 2, wherein each airflow channel (20,22) is formed as a venturi and each airflow sensor (28,30) is located at the throat of its associated venturi.

4. A method of measuring mass airflow into an internal combustion engine using a mass airflow meter as claimed in any one of claims 1 to 3.

FIG.1

FIG.2

FIG.3

DC AMPLIFER

FIG.4